# EUROPEAN PATENT APPLICATION

(11) **EP 4 775 449 A1**
(43) Date of publication of application: **15.07.2026**
(21) Application number: 25151018.6
(22) Date of filing: 09.01.2025
(51) Int. Cl.: B60P 3/055, B60P 7/13, B65D 88/12

(54) **PLATFORM FOR GAS TRANSPORTATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: KARASU, Kemal, 41135 Kocaeli (TR)
(74) Representative: Air Liquide

(57) **Abstract**

The invention relates a platform for gas transportation comprising at least a bottom to receive at least one gas packaging in a predetermined space and a mechanical fixing system movable between a first position and a second position so that the gas packaging is locked in the predetermined space in the said first position and so that the gas packaging is released from the predetermined space in the said second position.

## Description

The invention relates to a platform for gas transportation, for example cylinders, bundles. The inventions relates also to a process for loading or unloading of gas packaging from a platform for gas transportation.

It is known from the prior art to transport gas cylinders with trucks. These bottles are transported then individually or after being gathered in a basket/bundle.

FR 2 978 428 discloses an example of such transport. This system for transporting containers of pressurized fluid which are elongate along a longitudinal axis in a cargo container, comprises means of storage of fluid containers in the cargo container along a vertical axis, which comprise a platform forming part of the structure of the cargo container and adapted to accommodate several juxtaposed containers of fluid extending vertically and resting on the platform by their respective bases, and means of storage containers of fluid in the cargo container on an axis having an inclination to a horizontal plane of less than 15 degrees, which have at least one basket or drawer supported by the structure of the cargo container, above the loading platform, and adapted to accommodate several containers of fluid juxtaposed or stacked and extending substantially horizontally.

A disadvantage of this disclosure is the impossibility to use a crane mean for loading and unloading the truck. This causes plenty of manual movements. Thus the safety of the operators is not guaranteed.

EP0203303A2 discloses another example of a mean for gas transportation transport. A container comprises a frame constructed from load-bearing profiles with longitudinal and transverse supports, profiled side walls placed on said frame and bottom and top regions in each case constituted as a grid, wherein the gas bottles inserted into the container standing on the bottom region with upwardly exposed valves are disposed in a plurality of rows extending beside one another in the longitudinal direction of the container and are clamped in groups by means of clamping devices against the profile of the side walls and wherein the gas bottles of the outermost rows of gas bottles lying adjacent to the side walls engage with a part of their periphery into the indents formed by the profile of the side walls and are thus fixed against slipping in the longitudinal direction.

A disadvantage of this disclosure is the impossibility to use a crane mean for loading and unloading the truck. This causes plenty of manual movements. Thus the safety of the operators is not guaranteed. Moreover this system does not ensure sufficient stability and support for the gas packaging.

An aim of the present invention is to overcome all or part of the drawbacks of the prior arts noted above. The invention seeks thus to design a mean for gas transportation minimizing the numbers of handlings to load and unload gas packaging while ensuring safety of the operators and good support of the gas packaging.

The object of the invention is achieved by a platform for gas transportation comprising at least :
- a bottom to receive at least one gas packaging in a predetermined space,
- a mechanical fixing system movable between a first position and a second position, and the mechanical fixing system locks the gas packaging in said predetermined space when in said first position and releases the gas packaging from said predetermined space when in said second position; the mechanical fixing system is outside said predetermined space when in said second position.

According to further embodiments :
The said mechanical fixing system comprises at least one opening arranged on said bottom, at least a locking element to cooperate with the said at least one opening to lock the gas packaging in said predetermined space when in said first position.

The said mechanical fixing system reaches first an intermediary position unlocking the gas packaging from said predetermined space before reaching said second position, wherein said intermediary position does not allow the gas packaging to be fully released from said predetermined space.

The bottom is made to receive at least two gas packagings: a first gas packaging (101) in a first predetermined space and a second gas packaging in a second predetermined space.

The said mechanical fixing system comprises a first handle to action the said mechanical fixing system between the first and the intermediary position, and a second handle (to action the mechanical fixing system between the intermediary and the second position.

The first handle or/and the said second handle is removable.

The said mechanical fixing system comprises a detector to detect if said mechanical fixing system is in the first position or in the second position and to emit an alarm if the said mechanical fixing system is not in the first and/or the second position.

The platform comprises a portable ladder and an aisle formed between the first predetermined space and the second predetermined space, the said portable ladder to be fixed to the bottom or to the aisle and allowing access the aisle.

The aisle is between 20 to 25 cm width and positioned at least 60 cm above the bottom.

The platform is a trailer or a truck.

The invention relates to a process for loading at least one gas packaging on a platform of the invention comprising at least the following steps :
- loading of at least one gas packaging using a crane on the bottom,
- fixation of the locking element to the opening so that the gas packaging is locked on the bottom.

The invention relates to a process for unloading at least one gas packaging on a platform of the invention, comprising the following steps :
- disengagement of the locking element from the opening,
- displacement of the locking element so that the locking element is placed outside the predetermined space,
- unloading of at least one gas packaging using a crane.

The invention will be better understood on reading the following description and examining the accompanying figures. These figures are given for illustrative purposes only but in no way limit the invention.

Fig. 1 represents a perspective view of the platform according to one embodiment of the invention;

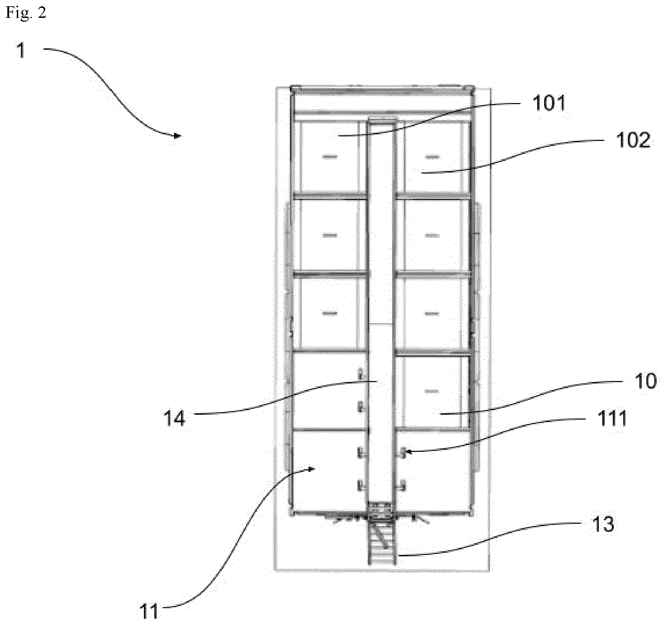

Fig. 2 represents a top view of the platform according to one embodiment of the invention ; and

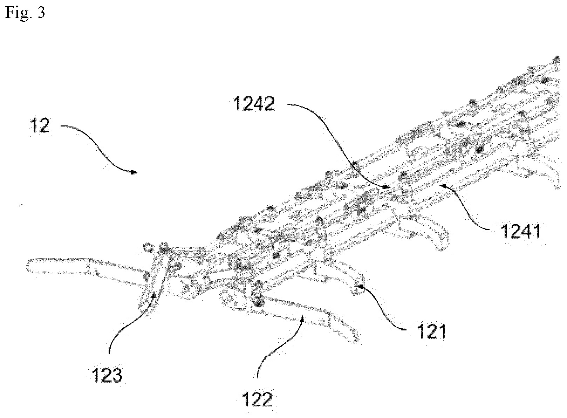

Fig. 3 represents a perspective view of a part of the mechanical fixing system according to one embodiment of the invention ;

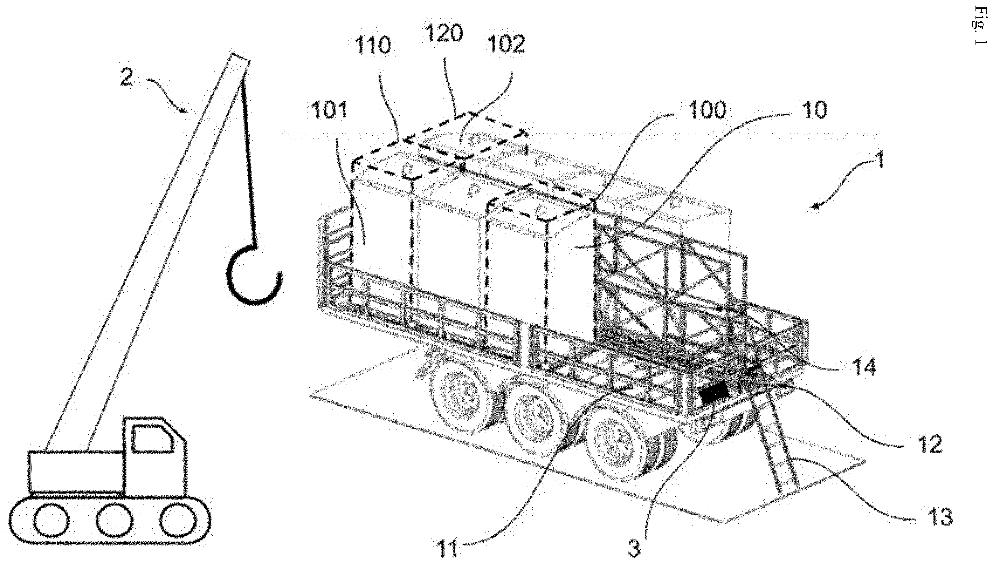

With Fig1. the invention is a platform 1 for gas transportation. The platform 1 can be for example a trailer or a truck. The platform 1 comprises a bottom 11 where at least one gas packaging 10, 101, 102, is placed for transportation. The gas packaging 10, 101, 102, is for example a gas bottle or a bundle comprising several bottles. The bottom 11 defines a lower surface of a predetermined space 100. The lower surface is a surface where the gas packaging bottom is installed. The predetermined space 100, 110, 120, is thus a volume of the platform 1 where the gas packaging(s) 10, 101, 102, is installed. The predetermined space can be the exact volume occupied by the gas packaging. The predetermined space 100, 110, 120 can also be a specific volume defined by the user of the platform to safely manipulate the gas packaging in the platform 1. For example, the predetermined volume 100, 110, 120, is at least 100% of the gas packaging volume. In another embodiment, the predetermined volume is at least 105% of the gas packaging volume. The platform 1 comprises also a mechanical fixing system 12. The mechanical fixing system 12 is movable between two positions. In the first position, the mechanical fixing system 12 locks the gas packaging 10, 101, 102. The gas packaging is blocked in the predetermined space 100, 110, 120. Thus in the first position the gas packaging is well supported and fixed on the bottom 11 after loading. Unloading of the gas packaging is not possible in this first position. In the second position, the mechanical fixing system 12 releases the gas packaging from the predetermined space 100, 110, 120. Unloading of the gas packaging is possible in this second position.

In one embodiment, the bottom 11 receives at least two gas packaging : a first gas packaging 101 in a first predetermined space 110, and a second gas packaging 102 in a second predetermined space 120.

In one embodiment, the mechanical fixing system 12 comprises a first element 111 arranged on the bottom 11. The mechanical fixing system 12 comprises a locking element 121 that cooperates mechanically with the first element 111, when the mechanical fixing system 12 is in the first position. It is the cooperation of these two elements 111, 121, which makes possible to lock/block the at least one packaging. The support is thus stronger. For example, the first element 111 is an opening on the bottom 11 and the locking element 121 is a clamp. For example, in the first position, the clamp catches a part of the gas packaging and the clamp 121 is fixed in the opening 111. In the second position, the clamp is disengaged from the opening. In another embodiment, the geometry of the first and locking element 111, 121 can be chosen so that their geometries are complementary. It will thus allow rapid connection and less aging due to mechanical interaction.

In one embodiment, only the locking element 121 can be movable. In another embodiment, only the first element 121 can be movable. In another embodiment, both first and locking element can be movable.

In another embodiment, the mechanical fixing system 12 comprises at least two locking elements 121. In another embodiment, the mechanical fixing system 12 is arranged along the median of the bottom 11. And the at least two locking elements 121 are arranged on either side of the median of the bottom 11. The median shares the bottom 11 into two equal part, so two equal surfaces. Thus, the loading and unloading of the platform 1 are performed on both sides of the platform 1.

In another embodiment, the mechanical fixing system 12 is movable to an intermediary position so that it unlocks the gas packaging 10, 101, 102, from the predetermined space 100, 110, 120. This intermediary position is between the first and the second position. The intermediary position does not allow the gas packaging to be fully released from the predetermined space 100, 110, 120. Thus, it is not possible to load and unload the gas packaging using a crane for example.

In the first and the intermediary position, the locking element 121 is in the predetermined space.

In the second position, the locking element 121 is outside the predetermined space. Thus, it is possible to load and unload the gas packaging using a crane for example. It is possible to move the gas packaging 10, 101, 102, safely and without damaging it.

In another embodiment, the mechanical fixing system 12 comprises a sole handle to action the mechanical fixing system 12 between the first, the intermediary and second position. In one embodiment, only the locking element 121 is actioned. It reduced thus the complexity of the system. For example, the sole handle moves the locking element 121, for example a clamp, into the first, intermediary and second position. In another embodiment, the sole handle is removable. Thus, this configuration avoids wrong handling when the handle stays permanently attached.

In another embodiment, the mechanical fixing system 12 comprises a first handle and a second handle. The first handle allows to action the mechanical fixing system 12 between the first and the intermediary position. The second handle is to action the mechanical fixing system 12 between the intermediary and the second position. In one embodiment, only the locking element 121 is actioned. It reduced thus the complexity of the system. In another embodiment, the first or/and the second handle are removable. Thus, wrong handling is avoided when the handles stays permanently attached.

For example, the locking element 121 is arranged on a stem. The solo/first handle makes the stem rotate around an axis parallel to the bottom 11 so that the locking element 121 moves between the first and the intermediary positions. For example, the locking element 121 is arranged on the stem with a pivot. The solo/first handle makes the stem, thus the pivot and the locking element 11, rotate around an axis parallel to the bottom 11 between the first and the intermediary positions. The second handle makes the locking element 121, rotate on the pivot. It rotates around for example an axis perpendicular to the bottom 11 between the intermediary and the second positions.

In another embodiment, the mechanical fixing system 12 comprises a detector 3 to detect if the mechanical fixing system 12 is in the first position or in the second position. For example the detector 3 detects if the locking element 121 cooperates with the first element 111 in the first position so that the gas packaging is locked on the platform 1. The detector is able to emit an alarm if the said mechanical fixing system 12 is not in the first position. The detector emits an alarm for example if the clamp is disengaged from the opening. The mechanical fixing system 12 is movable in an intermediary position, for example between the first and the second positions. When the mechanical fixing system 12 is in this intermediary position. Then the detector 3 detects it, so detects that the mechanical fixing system 13 is not in the first and/or second position and emits an alarm. Thus, the detector is an additional safety mean to ensure that the gas packaging is sufficiently fixed, blocked on the bottom 11.

In another embodiment, the platform 1 comprises a portable ladder 13 and an aisle 14 parallel to the bottom so that the aisle 14 forms a path for a user, the said portable ladder 13 to be fixed parallel to the bottom 11 and below the aisle 14 or to be fixed on the aisle 14 so that a user has an access to the aisle. Thus, an operator is able to check visually all gas packaging walking through the aisle. The operator is also able to check if the mechanical fixing system 12 is in the first, intermediary or second position. Thus, the operators is able to check if the gas packaging is sufficiently fixed on the platform 1. In other words, the aisle 14 is formed between the first predetermined space 110 and the second predetermined space 120.

In another embodiment, the aisle 14 is between 20 to 50 cm width, preferably between 20 to 25 cm width. The aisle 14 is positioned at least 60 cm above the bottom 11. The height of the aisle 14 is measured along a longitudinal axis perpendicular to the bottom 11. This aisle width allows an easier movement of the operator along the aisle.

In another embodiment, the crane 2 is installed on the platform 1.

The invention concerns the process for loading at least one gas packaging 10, 101, 102 on a platform 1 for gas transportation such as defined above. The process for loading comprises a step of loading at least one gas packaging 10, 101, 102. This loading step is done with a crane 2. The crane 2 enables the gas packaging 10, 101, 102, to be lifted safely above the platform 1 and enables the gas packaging 10, 101, 102 to be safely arranged in the predetermined space 100, 110, 120. Then the process for loading comprises a step of blocking the gas packaging 10, 101, 102 on the bottom 11 with the mechanical fixing system 12 as explained above. In one embodiment, the step of blocking the gas packaging 10, 101, 102 comprises the fixation of the locking element 121 to the first element 111. Thus, the first and locking element 111, 121 cooperate to lock the gas packaging on the bottom 11.

The invention concerns the process for unloading at least one gas packaging 10, 101, 102, on a platform 1 for gas transportation such as defined above. The process for unloading comprises a step of release at least one gas packaging 10, 101, 102. The release is done by moving the mechanical fixing system 12 in the intermediary position. For example, the release is done through the disengagement of the locking element 121 from the first element 111. Then the process comprises a step of moving the mechanical fixing system 12 in a second position. Thus, the locking element 121 is placed outside the predetermined space 100, 110, 120. Then the process comprises the step of unloading of the gas packaging 10, 101, 102 with a mean of a crane 2. Thus, the gas packaging 10, 101, 102, is moved outside the predetermined space. The crane 2 enables the gas packaging 10, 101, 102, to be lifted safely above the platform 1 of the invention and enable the gas packaging 10, 101, 102, to be safely arranged in the predetermined space 100, 110, 120 and to be safely from the predetermined space 100, 110, 120.

## Claims

1. Platform (1) for gas transportation comprising at least :
- a bottom (11) to receive at least one gas packaging (10) in a predetermined space (100),
- a mechanical fixing system (12) movable between a first position and a second position,
wherein the mechanical fixing system (12) locks the gas packaging (10) in said predetermined space (100) when in said first position and releases the gas packaging (10) from said predetermined space when in said second position; the mechanical fixing system (12) is outside said predetermined space (100) when in said second position.

2. Platform (1) according to claim 1, wherein the said mechanical fixing system (12) comprises at least one opening (111) arranged on said bottom (11), at least a locking element (121) to cooperate with the said at least one opening (111) to lock the gas packaging (10) in said predetermined space (100) when in said first position.

3. Platform (1) according to claim 2, wherein the said mechanical fixing system (12) reaches first an intermediary position unlocking the gas packaging (10) from said predetermined space (100) before reaching said second position, wherein said intermediary position does not allow the gas packaging (10) to be fully released from said predetermined space (100).

4. Platform (1) according to one of the previous claim 1 to 3, wherein the bottom (11) is made to receive at least two gas packaging: a first gas packaging (101) in a first predetermined space (110) and a second gas packaging (102) in a second predetermined space (120).

5. Platform (1) according to claim 4 in combination with claim 3, wherein the said mechanical fixing system (12) comprises a first handle (122) to action the said mechanical fixing system (12) between the first and the intermediary position, and a second handle (123) to action the mechanical fixing system (12) between the intermediary and the second position.

6. Platform (1) according to claim 6, wherein the first handle or/and the said second handle (123) is removable.

7. Platform (1) according to one of the previous claim 1 to 6, wherein the said mechanical fixing system (12) comprises a detector (3) to detect if said mechanical fixing system (12) is in the first position or in the second position and to emit an alarm if the said mechanical fixing system (12) is not in the first and/or the second position.

8. Platform (1) according to one of the previous claim 4 to 7, wherein the platform (1) comprises a portable ladder (13) and an aisle (14) formed between the first predetermined space (110) and the second predetermined space (120), the said portable ladder to be fixed to the bottom (11) or to the aisle (14) and allowing access the aisle (14).

9. Platform (1) according to one of the previous claim 11, wherein the aisle (14) is between 20 to 25 cm width and positioned at least 60 cm above the bottom (11).

10. Platform (1) according to one of the previous claim 1 to 9, wherein the platform (1) is a trailer or a truck.

11. Process for loading at least one gas packaging on a platform (1) according to one of claim 2 to 10, comprising at least the following steps :
- loading of at least one gas packaging (10) using a crane (2) on the bottom (11),
- fixation of the locking element (111) to the opening (111) so that the gas packaging is locked on the bottom (11).

12. Process for unloading at least one gas packaging on a platform (1) according to one of claim 2 to 10, comprising the following steps :
- disengagement of the locking element (121) from the opening (111),
- displacement of the locking element (121) so that the locking element (121) is placed outside the predetermined space (100),
- unloading of at least one gas packaging (10) using a crane (2).
